# EUROPEAN PATENT SPECIFICATION

(11) **EP 3 266 629 B1**
(45) Date of publication and mention of the grant of the patent: **16.09.2020**
(21) Application number: 16001530.1
(22) Date of filing: 08.07.2016
(51) Int. Cl.: B60D 5/00

(54) **DEVICE FOR SUPPORTING A LOAD OF A GANGWAY STRUCTURE BETWEEN TWO CARS, A GANGWAY FOR CONNECTING A FIRST CAR WITH A SECOND CAR AND ALLOWING PASSAGE OF PASSENGERS FROM THE FIRST CAR TO THE SECOND CAR, MULTI-CAR VEHICLE COMPRISING A GANGWAY AND TWO CARS WHICH ARE CONNECTED BY THE GANGWAY AND METHOD TO SUPPORT A LOAD OF A GANGWAY STRUCTURE BETWEEN TWO CARS**
VORRICHTUNG ZUM TRAGEN EINER LAST EINES ÜBERGANGS ZWISCHEN ZWEI WAGEN, EIN ÜBERGANG ZUM VERBINDEN EINES ERSTEN WAGENS MIT EINEM ZWEITEN WAGEN ZUR ERMÖGLICHUNG DES DURCHGANGS VON PASSAGIEREN AUS DEM ERSTEN WAGEN IN DEN ZWEITEN WAGEN, FAHRZEUG MIT MEHREREN WAGEN MIT EINEM ÜBERGANG UND ZWEI WAGEN, DIE DURCH DEN ÜBERGANG MITEINANDER VERBUNDEN SIND, SOWIE VERFAHREN ZUM TRAGEN DER LAST EINER ÜBERGANGSSTRUKTUR ZWISCHEN ZWEI WAGEN
DISPOSITIF POUR SUPPORTER UNE CHARGE D'UNE STRUCTURE DE PASSERELLE ENTRE DEUX CABINES, PASSERELLE PERMETTANT DE RELIER UNE PREMIÈRE CABINE AVEC UNE SECONDE CABINE ET PERMETTANT LE PASSAGE DE PASSAGERS DE LA PREMIÈRE À LA SECONDE CABINE, VÉHICULE À PLUSIEURS CABINES COMPRENANT UNE PASSERELLE ET DEUX VOITURES QUI SONT CONNECTÉES PAR LA PASSERELLE D'ACCÈS ET PROCÉDÉ POUR SUPPORTER UNE CHARGE D'UNE STRUCTURE DE PASSERELLE ENTRE DEUX CABINES

(43) Date of publication of application: 10.01.2018
(73) Proprietor: Dellner Couplers AB, 791 95 Falun (SE)
(72) Inventor: HEDH, Fredrik, 774 34 Avesta (SE); SMITH, Graham, Wotton under Edge GL12 7DH (GB)
(74) Representative: Tilmann, Max Wilhelm

(56) References cited:
- EP-A1- 0 625 459
- CN-A- 104 149 561
- DE-U1- 29 500 795
- DE-U1- 29 915 425

## Description

The invention pertains to a device that is suitable to support a load of a gangway structure, which gangway is suitable to connect a first car with a second car and to allow passage of passengers from the first car to the second car. The invention also pertains to a gangway, which gangway is suitable to connect a first car with a second car and to allow passage of passengers from the first car to the second car. The invention also pertains to a multi-car vehicle comprising a gangway and a first and a second car. The invention further pertains to a method to support a load of a gangway structure between two cars.

Multi-car vehicles are known in different designs and in different forms of adaptation for uses. Multi-car vehicles, for example, railway-bound trains (street cars and subway-trains also being considered as such trains) are known and are known for the purpose of transporting passengers as well as transporting goods. Further types of multi-car vehicles can be magnetic railway trains or can be buses (road buses as well as buses travelling on fixed tracks). A car of a multi-car vehicle can be a self-supporting car, whereby the car has sufficient wheels that are placed at sufficient locations such that the car can stand by itself without being supported by other cars, for example a three-wheeled car, a four wheeled car or a car with even more wheels placed at suitable locations. A car of a multi-car vehicle can also be of the non-self-supporting type, whereby the car has no wheels or only wheels provided in such number or arranged at such a place that the car can not stand by itself, but is vertically supported by at least one neighbouring car.

The present invention inter alia pertains to a gangway that can in a preferred embodiment be used with such types of multi-car vehicles and is suitable to connect a first car with a second car and to allow passage of passengers from the first car to the second car. In the majority of embodiments, the cars of the multi-car vehicle will be connected by a separate connecting device, for example a coupler, that connects the cars in a manner allowing the transmittal of substantial pulling and pushing forces. In the majority of cases, the gangway is designed separately and predominantly designed with the requirements for the passage of passengers from the first car to the second car in mind.

A gangway is typically suitable to shield the passenger from outside influences. In this context the gangway usually ensures that the passenger is shielded from the outside in all operational modes that the gangway will take. Further, gangways should preferably have a large internal width that allows easy passage of the passengers from the one car to the other car.

It is known that the gangway can have a bellows which can define at least a part of the envelope of the gangway, for example defines the outward facing part of the sidewalls and the ceiling of the gangway, while being open below the parts of the floor of the gangway that are intended for the passenger to tread on, or for example defines the outward facing part of the sidewalls, the floor and the ceiling of the gangway, thus fully encompassing the gangway while only being open at the front of the gangway that faces the one car and the back of the gangway that faces the other car. The bellows is a structure or structural element of the gangway.

The bellows can be of polymer material and is fastened to support hoops made from vacuum moulded panels. In a preferred embodiment, the bottom panel of the bellows can be removed for maintenance access. In a preferred embodiment, the bellows is a polymer laminate with exterior fabric layer that has printed pattern on it for aesthetic appearance.

Further, it is known that the gangway can have a series of hoops, which can have an essentially rectangular, preferably quadratic shape, wherein the corners can be rounded or chamfered or bevelled. A respective hoop can be made up of joint together beams. The hoop can envelope an area that is large enough for a passenger to pass through. Preferably at least at somewhere along the circumference of the hoop, the distance between to opposite points on the hoop is larger than 1,5m, preferably larger than 1,75m, especially for Metros and can be less than that for high-speed or intercity trains.

The bellows can be attached to the hoops. This allows the hoops to support the bellows. Alternatively, a separate support structure for the bellows can be provided.

The structure or a structural element of the gangway, which can be the bellows, hoops, floor, sidewall and/or ceiling or at least a part of it, often has to be supported between the two cars connected by the gangway. It is common to use a designated support plate fixed to the coupler linking two cars of the vehicle, often using wear material as contact surface to the gangway, as support. Sometimes it is not possible or not desired to use the coupler as support. One solution to use a structural element of the gangway is shown in DE 202015103938 U1, but it consumes space and dictates the position of the connection point to the hoops.

DE 295 00 795 U1 discloses a segmented floor of a gangway. The individual segments of the floor are arranged to support each other. To prevent excessive bending through of the segments telescope are provided. Each telescope has two telescopic beams, one each sticking out at an end of a sleeve. Each telescopic beam is connected to an end-segment of the floor. The sleeve is connected to the middle segment of the floor.

CN 104 149 561 A discloses a coupler rod. The coupler rod has a segmented beam. Inset into the beam 52 is a sliding means which is supported by the beam. The sliding means has a connecting structure to be connected to one of the cars. Within the sliding means and the beam a spring is arranged.

DE 299 15 425 U1 discloses a device for supporting a load of a gangway structure between two cars, the device having a central portion, on which the load of the gangway structure can be supported, and two hooks having at least one connecting structure to be connected to one of the cars, and hooks, wherein a pinion in the central portion compulsory couples the hooks to move in opposite directions at least substantially the same distance relative to the central portion in a translational direction along the longitudinal axis of the beam.

It is an object of the invention to provide a support for the gangway, which is not connected to the coupler and allows the gangway to move freely in the plane parallel to the contact surface so that wearing of the structure, structural element and/or the gangway can be reduced.

The object is solved by a device for supporting a load of a gangway structure between two cars according to claim 1, a gangway for connecting a first car with a second car and allowing passage of passengers from the first car to the second car according to claim 9, a multi-car vehicle comprising a gangway and two cars which are connected by the gangway according to claim 12, and a method to support a load of a gangway structure between two cars according to claim 13. Further embodiments are described in the subordinate claims and the description.

The basic idea of the invention is to provide a device for supporting a load of a gangway structure between two cars such that the gangway structure can be supported without the need of the structure to move. The structure can rest without substantial movement on a surface, preferably a surface of a beam. In other words, the supporting surface is substantially centred between the two cars to support the gangway structure.

The structure can directly rest on the surface, i.e. the structure can be in direct contact with the surface. Alternatively or in addition at least for a part of the structure intermediate elements like damping elements can be arranged between the surface and the structure.

A device for supporting a load of a gangway structure between two cars is provided. The device has a (center) beam, on which the load of the gangway structure can be supported. The device further comprises two sliding means which are supported by the beam. Each of the sliding means has at least one connecting structure which can be connected to one of the cars. The connection between the connecting structure and the car can be a direct connection, for example the connecting structure can be welded to the car, or can be an indirect connection, for example the connecting structure is welded to an intermediate element welded to the car. The beam and the sliding means are adapted such that the sliding means are compulsory coupled to the beam to move in opposite directions at least substantially the same distance relative to the beam in a translational direction along the longitudinal axis of the beam.

The sliding means are supported by the beam such that the sliding means can be symmetrically moved with regard to the beam. The beam can be centred by the movement of the sliding means. The centred support for the gangway structure can follow a curve, the gangway and/or the two cars which are connected by the gangway are subjected to move. By the device a compulsory guide can be obtained for one of the two sliding means in response to the movement of the other sliding means with regard to the beam.

When subjected to a curve, the multi-car vehicle passes the curve first with the first car, then the gangway and then the second car. Due to the curve the first sliding means (in the direction of the multi-car vehicle) is subjected to a force which will lead to a longitudinal movement of the first sliding means connected to the first car by the respective connecting structure. The first sliding means slides in the longitudinal direction of the beam back or forth as a function of the kind of curve, i.e. whether it is a right hand bend or a left hand bend. By the formation of the compulsory coupling the movement of the first sliding means leads to a response moving the other of the two sliding means, i.e. the second sliding means. The second sliding means moved in the opposite direction than the first sliding means. Further, the second sliding means moves at least substantially the same distance as the distance detected in the movement of the first sliding means. The two sliding means are moving in a translational direction along the longitudinal axis of the beam.

Thus, a device is provided by which a gangway structure can be supported and the gangway structure can rest on a surface of the beam. Thus, the gangway or gangway structure can at least substantially rest on the device, wherein the structure supported by the device can be connected to one of the cars by an end element, which connects the structure supported by the device to one of the cars.

Due to the centring of the beam by the compulsory coupling of the movement of the sliding means, a direct control of the gangway structure can be obtained. This can lead to a governing of the gangway movement such that the movement is predictable. The gangway can be supported without substantial rotation of the gangway.

Due to the centring of the beam the hoops of the gangway, which can be the gangway structure, can be arranged such that the respective centre of mass of the hoops lie on a straight line, preferably a straight line that is perpendicular to the respective plane in which a respective hoop lies in. This operational mode is preferably the operational mode that the gangway takes up, when built in between two cars that travel along a straight line on level ground.

According to the invention the term "structure" encompasses a structural element of the gangway, which can be one or more of the elements of the group comprising bellows, hoops, floor, sidewall and/or ceiling or at least a part of it, which has to be supported between the two cars connected by the gangway.

The coupling element comprises a pinion means mounted in the beam, wherein the sliding means are connected to rack means which are in engagement with the pinion means. One pinion means, preferably a pinion, can be mounted in the, preferably hollow, beam. A section of the sliding means is formed as (toothed) rack means or the sliding means is connected to a (toothed) rack means. Each of the rack means of the sliding means is in engagement with the pinion means such that when the rack means of one of the sliding means moves in a first direction, the rack means of the other sliding means moves into the opposite direction which results in the movement of the sliding means in opposite directions. The rack means of each of the sliding means is equally formed. Further, since the rack means are adapted for the engagement with the single pinion and having the same shape, each of the rack means/sliding means is moved substantially the same distance. The movement of one of the sliding means spins the pinion which in turn compulsory moves the other sliding means.

In a preferred embodiment, the beam comprises a hollow structure by which the sliding means can be at least partially surrounded in circumference direction of the sliding means. A section of the beam can function as a sleeve for a section of the sliding means. The sliding means can at least partly move within the beam, which can be situated or positioned between the two cars so that the compulsory movement of the sliding means can be obtained without the need to provide additional space in or at the cars. A reduction or elimination of space needed in the cars for the movement of sliding means with regard to the beam and the supporting surface on the beam can be obtained.

In a preferred embodiment, the connecting structure is connected to the sliding means by an arm which extends through a guiding in the beam. The sliding means, the arm and the connecting means can be formed as a single piece. The sliding means, the arm and the connecting means can be formed from separate pieces mounted together. The sliding means can be guided by the guiding which can be formed by an opening or aperture in the beam which has an elongated shape in the longitudinal direction of the beam. The aperture or opening can be open at one end of the elongated shape. The elongated shape can be adapted to the shape of the arm so that the width of the arm in the direction transverse to the movement corresponds to the respective width of the aperture or opening. This can provide a simple and easy to manufacture possibility with almost no maintenance effort. Preferably, the arms extend in a direction which is substantially parallel to the normal of the surface of the beam on which the structure of the gangway can be supported. Further, preferably, the connecting structure is located opposite to the surface of the beam on which the structure can be supported.

Further, in a preferred embodiment, the sliding means has a cross-section which is at least partially adapted to a cross-section of the beam to reduce wear and to guide the sliding means with regard to the beam.

According to a preferred embodiment, the sliding means can be moved into a position in which the distance between the connecting structures of the two sliding means is smaller than the length of the beam (compressed position). Further, the sliding means can be moved into a further position in which the distance between the connecting structures of the two sliding means is bigger than the length of the beam (extended position). In the extended position it is possible that the beam is not directly supported by bearings of a mounting frame and the sliding means can act as cantilevers. In the compressed position the beam is fully (directly) supported by the bearings of the mounting frame. Only in the extended position, which correspond to severe movement conditions, the sliding means act as cantilevers, which can lead to lower internal stress levels in normal movement conditions. Lower stresses on the bearings can lead to longer life which usually corresponds to longer service intervals.

According to a preferred embodiment, the beam comprises at least one coupling element which couples the sliding means to the beam. The coupling element can consist of at least one element selected from the group comprising a force coupling, a torque coupling or a electromagnetic coupling.

According to the invention, the term "coupling" encompasses any means to connect beam and sliding means together for the purpose of transmitting power. According to the invention, the coupling is preferably a coupling which does not allow disconnection of beam and sliding means during operation. The primary purpose of the coupling according to the invention is to join the beam and the sliding means to move the two sliding means the same distance with regard to the beam in opposite directions, respectively.

In a preferred embodiment, the rack means are situated between the pinion means and an inner surface of a wall of the beam. A simple guidance of the rack means can be obtained.

In a preferred embodiment, the beam comprises a stop for a movement of a hoop of the gangway structure, which is supported by the beam. The stop can be arranged at the end of the beam and preferably positioned on top of the beam. The stop can be formed as a protrusion extending from the top surface of the beam. A stop can be formed at both ends of the beam. By this stop it can be prevented that the gangway structure can slip off the beam in situations when the two cars and the gangway connecting the two cars are subjected to conditions which form an extreme range of an influence quantity, especially driving a curve having a very small curve radius.

The invention provides a gangway for connecting a first car with a second car and allowing passage of passengers from the first car to the second car, the gangway comprising at least one device as described above. Preferably, the gangway comprises two of the above-described devices for supporting a load of a gangway structure between two cars. The two devices can be positioned spaced apart, preferably in a substantially parallel orientation with regard to each other. However, the number of the devices described above which can form part of a gangway according to the invention, is not limited by two, a gangway according to the invention can comprise even more than two of the devices. The devices can be located in the area of or near the floor, the roof and/or the side of the gangway. According to the invention, the term "support" is not restricted to a support which has to be located in the area of or under the floor.

In a preferred embodiment, the gangway comprises a side wall of a gangway glidingly supported on at least one above-described device, preferably two above-described devices.

In a preferred embodiment, the gangway comprises panels forming at least a part of a floor of the gangway supported by the at least one, preferably two, devices as described above.

The invention further provides a multi-car vehicle comprising a gangway as described above.

Further, the invention provides a method to support a load of a gangway structure between two cars, wherein the method comprises the step of supporting the load by a beam. The beam supports two sliding means and when a force is applied to the sliding means in the direction of the sliding, according to the method, the two sliding means are moved in opposite direction at least substantially the same distance relative to the beam in a translational direction along the longitudinal axis of the beam.

Below, the invention will be described with reference to figures that only show exemplary embodiments of the invention.

In those figures
- Fig. 1: shows a view from above onto a device according to the invention in a partially cut view in a fully extended position;
- Fig. 2: shows a side view onto the device of Fig. 1 in a fully extended position;
- Fig. 3: shows a view from above onto a device according to the invention in a partially cut view in a nominal position;
- Fig. 4: shows a side view onto the device of Fig. 1 in a nominal position;
- Fig. 5: shows a view from above onto a device according to the invention in a partially cut view in a fully compressed position;
- Fig. 6: shows a side view onto the device of Fig. 1 in a fully compressed position;
- Fig. 7: shows a schematic side view of two cars connected by a gangway, wherein at least a gangway structure is supported by a device according to the invention; and
- Fig. 8: shows a schematic view in longitudinal direction of a multi-car vehicle, wherein at least a gangway structure is supported by a device according to the invention.

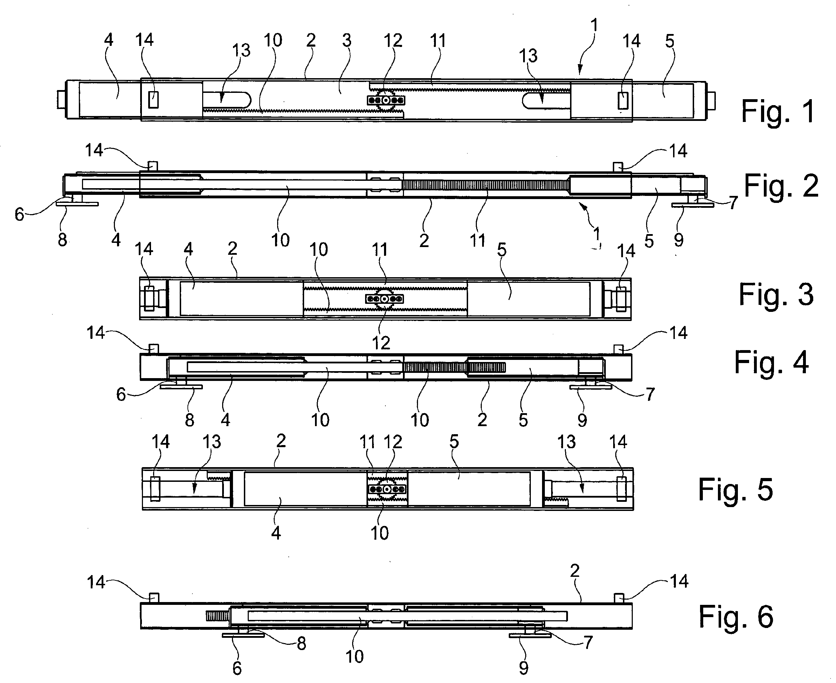

Figures 1 to 6 show a device 1 according to the invention from above in a partly cut view. The device 1 comprises a beam 2. The beam 2 has a surface 3 facing above, on which a structure of a gangway 24 can rest. The beam 2 can support a structure of a gangway 24 which is situated between two cars of a multi-car vehicle. Near the ends of the beam 2 a stop 14 is formed to stop movement of the structure of the gangway.

The beam 2 is hollow and within the beam 2 two sliding means 4, 5 are slidingly supported by the beam 2. The sliding means 4, 5 have a section which comprises an outer cross-section which corresponds to an inner cross-section of the beam 2. The sliding means 4, 5 are slidingly guided in a longitudinal direction of the beam 2.

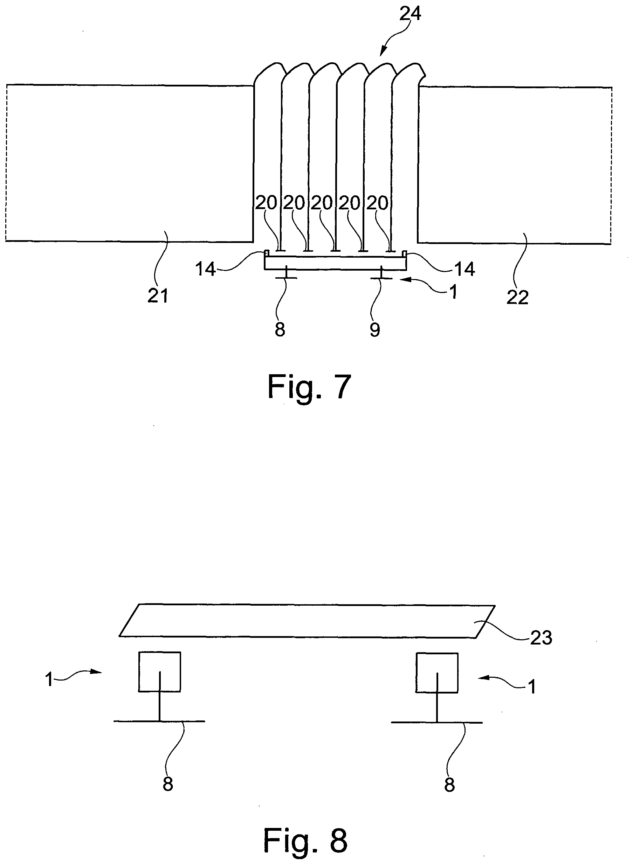

Each of the sliding means 4, 5 is connected by an arm 6, 7 to a connecting structure 8, 9 which can be connected to a structure of a car 21, 22 (see Fig. 7). The arms 6, 7 extend through a guiding 13 formed as an opening in the beam 2.

Each of the sliding means 4, 5 comprises section which is formed as a (toothed) rack 10, 11 which is slidably guided in the beam 2 in a longitudinal direction of the beam 2.

A pinion 12 is mounted in the beam 2 which engages the racks 10, 11 of the sliding means 4, 5. By the pinion 12, the sliding means 4, 5 are coupled together such that when one of the sliding means 4, 5 (the (toothed) rack section) moves in a longitudinal direction of the beam 2, the other one of the sliding means 4, 5 moves in a direction opposite to the direction of the one (first) sliding means.

In Fig. 1 and 2 the device 1 according to the invention is shown in a fully extended state.

Fig. 3 and 4 show the device 1 according to the invention in a nominal state.

Fig. 5 and 6 show the device 1 according to the invention in a compressed state.

Fig. 7 is a side view of the device 1 used in a multi-car vehicle to support a gangway structure 20 which are the hoops 20 of the gangway 24 between two cars 21, 22.

Fig. 8 shows the embodiment of Fig. 7 in a longitudinal direction of the multi-car vehicle. Two devices 1 according to the invention which are spaced apart and substantially parallel to each other are used to support a gangway 24 structure formed as a panel 23 which forms part of the floor of the gangway 24.

## Claims

1. Device (1) for supporting a load of a gangway structure between two cars, the device having a beam (2), on which the load of the gangway structure can be supported, and two sliding means (4, 5) which are supported by the beam (2); each of the sliding means (4, 5) having at least one connecting structure (8, 9) to be connected to one of the cars; the beam (2) and the sliding means (4, 5) are adapted such that the sliding means (4, 5) are compulsory coupled to the beam (4, 5) to move in opposite directions at least substantially the same distance relative to the beam (2) in a translational direction along the longitudinal axis of the beam (2), **characterized in that** the coupling element (12) comprises a pinion means (12) mounted in the beam (2); wherein the sliding means (4, 5) are connected to rack means (10, 11) or the sliding means (4, 5) have a section formed as rack means (10, 11); the rack means (10, 11) being in engagement with the pinion means (12).

2. Device according claim 1, wherein the beam (2) comprises a hollow structure by which the sliding means (4, 5) can be at least partially surrounded.

3. Device according to claim 2, wherein the connecting structure (8, 9) is connected to the sliding means (4, 5) by an arm (6, 7) which extends through a guiding (13) in the beam (2).

4. Device according to any one of claims 1 to 3, wherein the sliding means (4, 5) has a section comprising a cross-section which is at least partially adapted to a cross-section of the beam (2).

5. Device according to any one of claims 1 to 4, wherein the sliding means (4, 5) can be moved into a first position in which the distance between the connecting structure (8, 9) of the two sliding means (4, 5) is smaller than the length of the beam (2); and the sliding means (4, 5) can be moved into a second position in which the distance between the connecting structure (8, 9) of the two sliding means (4, 5) is bigger than the length of the beam (2).

6. Device according to any one of claims 1 to 5, wherein the beam (2) comprises at least one coupling element (12) which couples the sliding means (4, 5) to the beam(2); the coupling element (12) consisting of at least one element selected from the group comprising a force coupling, a torque coupling or a magnetic coupling.

7. Device according to any one of claims 1 to 6, wherein the rack means (10, 11) are situated between the pinion means (12) and an inner surface of a wall of the beam (2).

8. Device according to any one of claims 1 to 7, wherein the beam (2) comprises a stop (14) for a movement of a hoop of the gangway structure which is supported by the beam (2); wherein the stop is arranged near an end of the beam (2).

9. Gangway for connecting a first car with a second car and allowing passage of passengers from the first car to the second car, comprising at least one device according to claims 1 to 8.

10. Gangway according to claim 9, comprising a sidewall of the gangway glidingly supported on the at least one device according to claims 1 to 8.

11. Gangway according to claim 9 or 10 further comprising panels forming at least a part of a floor of the gangway supported by the at least one device according to claims 1 to 8.

12. Multi-car vehicle comprising a gangway according to claims 9 to 11 and a first car and a second car, the gangway allowing passage of passengers from the first car to the second car.

13. Method to support a load of a gangway structure between two cars according to any one of claims 9 to 11, wherein the method comprises the step of supporting the load by a beam, the beam supporting two sliding means; and when a force is applied to the sliding means in the direction of the sliding moving the two sliding means in opposite directions at least substantially the same distance relative to the beam in a translational direction along the longitudinal axis of the beam.

## Patentansprüche

1. Vorrichtung (1) zum Tragen einer Last einer Übergangsstruktur zwischen zwei Wagen, wobei die Vorrichtung aufweist: einen Balken (2), auf dem die Last der Übergangsstruktur unterstützt werden kann, und zwei Gleitmittel (4, 5), die vom Balken (2) unterstützt werden; wobei jedes der Gleitmittel (4, 5) mindestens eine Verbindungsstruktur (8, 9) aufweist, die mit einem der Wagen zu verbinden ist; wobei der Balken (2) und die Gleitmittel (4, 5) so angepasst sind, dass die Gleitmittel (4, 5) zwingend mit dem Balken (4, 5) gekoppelt sind, um sich in mindestens im Wesentlichen demselben Abstand relativ zum Balken (2) in einer translationalen Richtung entlang der Längsachse des Balkens (2) in entgegengesetzten Richtungen zu bewegen, **dadurch gekennzeichnet, dass** das Kopplungselement (12) ein Zapfenmittel (12) umfasst, das im Balken (2) montiert ist, wobei die Gleitmittel (4, 5) mit Gestellmitteln (10, 11) verbunden sind oder die Gleitmittel (4, 5) einen als Gestellmittel (10, 11) geformten Abschnitt aufweisen; wobei die Gestellmittel (10, 11) in Eingriff mit dem Zapfenmittel (12) sind.

2. Vorrichtung nach Anspruch 1, wobei der Balken (2) eine hohle Struktur umfasst, von der das Gleitmittel (4, 5) mindestens teilweise umgeben werden kann.

3. Vorrichtung nach Anspruch 2, wobei die Verbindungsstruktur (8, 9) durch einen Arm (6, 7), der sich durch eine Führung (13) im Balken (2) erstreckt, mit den Gleitmitteln (4, 5) verbunden ist.

4. Vorrichtung nach einem der Ansprüche 1 bis 3, wobei die Gleitmittel (4, 5) einen Abschnitt umfassen, der einen Querschnitt umfasst, der mindestens teilweise an einen Querschnitt des Balkens (2) angepasst ist.

5. Vorrichtung nach einem der Ansprüche 1 bis 4, wobei die Gleitmittel (4, 5) in eine erste Position bewegt werden können, in der der Abstand zwischen der Verbindungsstruktur (8, 9) der zwei Gleitmittel (4, 5) kleiner ist als die Länge des Balkens (2) ist; und die Gleitmittel (4, 5) in eine zweite Position bewegt werden können, in der der Abstand zwischen der Verbindungsstruktur (8, 9) der zwei Gleitmittel (4, 5) größer als die Länge des Balkens (2) ist.

6. Vorrichtung nach einem der Ansprüche 1 bis 5, wobei der Balken (2) mindestens ein Kopplungselement (12) umfasst, das die Gleitmittel (4, 5) mit dem Balken (2) koppelt; wobei das Kopplungselement (12) aus mindestens einem Element besteht, das aus der Gruppe, umfassend eine Kraftkopplung, eine Drehmomentkopplung oder eine Magnetkopplung, ausgewählt ist.

7. Vorrichtung nach einem der Ansprüche 1 bis 6, wobei sich die Gestellmittel (10, 11) zwischen dem Zapfenmittel (12) und einer Innenoberfläche einer Wand des Balkens (2) befinden.

8. Vorrichtung nach einem der Ansprüche 1 bis 7, wobei der Balken (2) einen Anschlag (14) für eine Bewegung eines Reifens der Übergangsstruktur umfasst, die durch den Balken (2) unterstützt wird; wobei der Anschlag nahe einem Ende des Balkens (2) angeordnet ist.

9. Übergang zum Verbinden eines ersten Wagens mit einem zweiten Wagen und Zulassen eines Durchgangs von Passagieren aus dem ersten Wagen in den zweiten Wagen, umfassend mindestens eine Vorrichtung nach Ansprüchen 1 bis 8.

10. Übergang nach Anspruch 9, umfassend eine Seitenwand des Übergangs, die gleitend auf der mindestens einen Vorrichtung nach Ansprüchen 1 bis 8 unterstützt wird.

11. Übergang nach Anspruch 9 oder 10, ferner umfassend Paneele, die mindestens einen Teil eines Bodens des Übergangs bilden, der durch mindestens eine Vorrichtung nach Ansprüchen 1 bis 8 unterstützt wird.

12. Mehrere Wagen umfassendes Fahrzeug nach Ansprüchen 9 bis 11 und einen ersten Wagen und einen zweiten Wagen, wobei der Übergang einen Durchgang von Passagieren vom ersten Wagen in den zweiten Wagen ermöglicht.

13. Verfahren zur Unterstützung einer Last einer Übergangsstruktur zwischen zwei Wagen nach einem der Ansprüche 9 bis 11, wobei das Verfahren den Schritt des Unterstützens der Last durch einen Balken umfasst, wobei der Balken zwei Gleitmittel unterstützt; und wenn eine Kraft auf die Gleitmittel in Richtung des Gleitens angelegt wird, Bewegen der zwei Gleitmittel in entgegengesetzten Richtungen mindestens im Wesentlichen in denselben Abstand relativ zum Balken in einer translationalen Richtung entlang der Längsachse des Balkens.

## Revendications

1. Dispositif (1) destiné à supporter une charge d'une structure de passerelle entre deux cabines, le dispositif possédant une poutre (2), sur laquelle la charge de la structure de passerelle peut être supportée, et deux moyens coulissants (4, 5) qui sont supportés par la poutre (2) ; chacun des moyens coulissants (4, 5) possédant au moins une structure de raccordement (8, 9) pour être raccordé à l'une des cabines ; la poutre (2) et les moyens coulissants (4, 5) étant adaptés de sorte que les moyens coulissants (4, 5) soient obligatoirement couplés à la poutre (4, 5) pour se déplacer dans des directions opposées au moins sensiblement de la même distance par rapport à la poutre (2) dans une direction de translation le long de l'axe longitudinal de la poutre (2), **caractérisé en ce que** l'élément de couplage (12) comprend un moyen à pignon (12) monté dans la poutre (2) ; lesdits moyens coulissants (4, 5) étant raccordés aux moyens à crémaillère (10, 11) ou lesdits moyens coulissants (4, 5) possédant une section façonnée sous la forme de moyens à crémaillère (10, 11) ; les moyens à crémaillère (10, 11) étant en prise avec les moyens à pignon (12).

2. Dispositif selon la revendication 1, ladite poutre (2) comprenant une structure creuse par laquelle les moyens coulissants (4, 5) peuvent être entourés au moins partiellement.

3. Dispositif selon la revendication 2, ladite structure de raccordement (8, 9) étant reliée aux moyens coulissants (4, 5) par un bras (6, 7) qui s'étend à travers un dispositif de guidage (13) dans la poutre (2).

4. Dispositif selon l'une quelconque des revendications 1 à 3, lesdits moyens coulissants (4, 5) possédant une section comprenant une section transversale qui est au moins partiellement adaptée à une section transversale de la poutre (2).

5. Dispositif selon l'une quelconque des revendications 1 à 4, lesdits moyens coulissants (4, 5) pouvant être déplacés dans une première position dans laquelle la distance entre la structure de raccordement (8, 9) des deux moyens coulissants (4, 5) est inférieure à la longueur de la poutre (2) ; et lesdits moyens coulissants (4, 5) pouvant être déplacés dans une seconde position dans laquelle la distance entre la structure de raccordement (8, 9) des deux moyens coulissants (4, 5) est supérieure à la longueur de la poutre (2) .

6. Dispositif selon l'une quelconque des revendications 1 à 5, ladite poutre (2) comprenant au moins un élément de couplage (12) qui couple les moyens coulissants (4, 5) à la poutre (2) ; ledit élément de couplage (12) comprenant en au moins un élément choisi dans le groupe comprenant un couplage de force, un couplage de couple ou un couplage magnétique.

7. Dispositif selon l'une quelconque des revendications 1 à 6, lesdits moyens à crémaillère (10, 11) étant situés entre les moyens à pignon (12) et une surface interne d'une paroi de la poutre (2).

8. Dispositif selon l'une quelconque des revendications 1 à 7, ladite poutre (2) comprenant une butée (14) pour un mouvement d'un arceau de la structure de passerelle qui est supporté par la poutre (2) ; ladite butée étant agencée près d'une extrémité de la poutre (2).

9. Passerelle destinée à relier une première cabine à une seconde cabine et permettre le passage des passagers de la première cabine à la seconde cabine, comprenant au moins un dispositif selon les revendications 1 à 8.

10. Passerelle selon la revendication 9, comprenant une paroi latérale de la passerelle supportée de manière coulissante sur l'au moins un dispositif selon les revendications 1 à 8.

11. Passerelle selon la revendication 9 ou 10 comprenant en outre des panneaux formant au moins une partie d'un plancher de la passerelle supportée par l'au moins un dispositif selon les revendications 1 à 8.

12. Véhicule multicabine comprenant une passerelle selon les revendications 9 à 11 et une première cabine et une seconde cabine, la passerelle permettant le passage de passagers de la première cabine à la seconde cabine.

13. Procédé pour supporter une charge d'une structure de passerelle entre deux cabines selon l'une quelconque des revendications 9 à 11, ledit procédé comprenant l'étape de support de la charge par une poutre, la poutre supportant deux moyens coulissants ; et lorsqu'une force est appliquée aux moyens coulissants dans la direction du coulissement, de déplacement des deux moyens coulissants dans des directions opposées au moins sensiblement de la même distance par rapport à la poutre dans une direction de translation le long de l'axe longitudinal de la poutre.
